# FASCICULE DE BREVET EUROPEEN

(11) **EP 2 036 101 B1**
(45) Date de publication et mention de la délivrance du brevet: **22.04.2015**
(21) Numéro de dépôt: 07788915.2
(22) Date de dépôt: 21.06.2007
(51) Int. Cl.: H01G 9/04

(54) **PROCEDE DE FABRICATION PAR BRASAGE DIFFUSION DES CONNEXIONS ELECTRIQUES D'UN ENSEMBLE DE STOCKAGE D'ENERGIE ELECTRIQUE**
VERFAHREN ZUM HERSTELLEN VON ELEKTRISCHEN VERBINDUNGEN FÜR EINE ELEKTRISCHE ENERGIESPEICHEREINHEIT
METHOD OF PRODUCING ELECTRICAL CONNECTIONS FOR AN ELECTRICAL ENERGY STORAGE UNIT

(30) Priorité: 21.06.2006 FR 0605554
(43) Date de publication de la demande: 18.03.2009
(73) Titulaire: Blue Solutions, 29500 Ergué Gabéric (FR); Ecole Polytechnique De l'Universite De Nantes, 44000 Nantes (FR)
(72) Inventeur: CAUMONT, Olivier, 29000 Quimper (FR); PAILLARD, Pascal, 44850 Ligne (FR); SAINDRENAN, Guy, 44200 Nantes (FR)
(74) Mandataire: Regimbeau
(86) Numéro de dépôt international: PCT/FR2007/001035
(87) Numéro de publication internationale: WO 2007/147978

(56) Documents cités:
- EP-A- 0 123 382
- DE-A1- 19 531 158
- FR-A- 2 583 213
- US-A- 2 824 365
- US-A- 3 141 238
- US-A- 3 433 920

## Description

### Domaine de l'invention

L'invention concerne les ensembles de stockage d'énergie électrique. Elle s'applique, en particulier, mais non limitativement, aux supercondensateurs, condensateurs, et générateurs ou batteries. Plus précisément, la présente invention concerne les procédés de réalisation des connexions électriques d'un ensemble de stockage d'énergie électrique.

### Présentation de l'Art antérieur

Un nombre important d'ensembles de stockage d'énergie électrique, dits de haute puissance, ont récemment été proposés, comme, par exemple, les supercondensateurs.

Cependant, les dispositifs connus ne donnent pas totalement satisfaction quant à leur connexion de puissance.

De manière conventionnelle, un supercondensateur comprend une bobine placée dans une enveloppe comprenant un corps principal fermé à ses deux extrémités par deux couvercles pouvant être munis d'un plot de liaison électrique. Dans la suite du texte, on parlera indifféremment de bobine ou d'élément bobiné de stockage d'énergie pour désigner la même pièce.

Pour réaliser la connexion électrique de cet ensemble de stockage d'énergie électrique, on peut utiliser une pièce de connexion électrique intermédiaire placée entre la bobine et chacun des couvercles.

Certaines autres conceptions utilisent directement les couvercles comme pièces de connexion électrique avec le collecteur de courant formé par les tranches collectrices de courant débordant la bobine à ses deux extrémités.

Ces tranches collectrices de courant, ou la pièce de connexion électrique intermédiaire, sont reliées grâce à un procédé de soudage, par exemple une technique de laser par transparence, à une connectique extérieure telle que les plots de liaison électrique, les couvercles eux-mêmes ou tout autre collecteur de courant.

D'autre part et selon la technologie choisie, ces conceptions utilisent également, en général, des connectiques extérieures ou des pièces de connexion électrique intermédiaires en partie embouties, pour former des plages de soudage présentant par exemple des zones amincies telles que bossages ou évidements préférentiellement vers l'intérieur du corps principal de l'enveloppe.

Les tranches collectrices de courant de la bobine sont alors connectées électriquement par soudage au niveau des zones amincies.

On peut également citer l'utilisation de connectiques extérieures ou de pièces de connexion électrique intermédiaires présentant des faces internes plates et des plages de soudage se présentant sous la forme d'évidements externes. Dans la suite du texte, on parlera de pièces collectrices de courant pour désigner indifféremment connectiques extérieures ou pièces de connexion électrique intermédiaires.

Ce procédé de réalisation des connexions électriques par soudage d'un ensemble de stockage d'énergie électrique dont les pièces collectrices de courant sont en aluminium ou en alliage léger, peut conduire à exposer l'ensemble lors du soudage à de hautes températures qui risquent de dégrader thermiquement les bobines.

D'autre part, le fait que le soudage est nécessairement limité aux zones amincies de soudage limite la surface des zones effectivement soudées entre les pièces collectrices de courant et les tranches collectrices de courant de la bobine. En conséquence, le courant n'est pas uniformément distribué dans la bobine en raison du fait que toutes les tranches collectrices de courant ne sont pas connectées entièrement vers la pièce collectrice de courant.

Cette caractéristique favorise les concentrations ioniques et électroniques dans certaines spires de la bobine au détriment d'autres conduisant alors à une augmentation de la résistance série Rₛ de l'ensemble de stockage d'énergie électrique.

De plus, la majeure partie de la chaleur émise en fonctionnement dans la bobine s'évacue axialement dans les débordants collecteurs de courant puis au travers des pièces collectrices de courant externes par les zones soudées ou fortement en contact.

Les échanges thermiques vers l'extérieur, part importante du refroidissement de la bobine sont alors limités par le contact restreint entre la bobine et le couvercle, ce qui favorise l'échauffement de cette dernière.

D'autre part, ce procédé de réalisation des connexions électriques d'un ensemble de stockage d'énergie est coûteux et complexe.

En effet, la technique de soudure laser par transparence est difficile à mettre en oeuvre car elle nécessite un ajustement précis entre les différentes pièces à assembler, un mauvais ajustement pouvant conduire à la multiplication des trous au travers des pièces collectrices de courant qui engendre en premier lieu une perte d'étanchéité des pièces collectrices de courant et en second lieu un mauvais rendement énergétique de l'ensemble de stockage d'énergie électrique.

En outre, l'utilisation du procédé de soudage par laser n'est efficace qu'avec certaines nuances d'aluminium ou d'alliages d'aluminium telles que l'aluminium Série 1000 (alliages d'aluminium comprenant au moins 99,9 % d'aluminium) qui ne sont pas idéalement adaptés à l'utilisation en supercondensateur. En effet, ces nuances sont pures et de ce fait plus ductiles, ce qui leur confère une moins bonne résistance mécanique en cas de montée en pression de l'enveloppe, et donc de moins bonnes caractéristiques de vieillissement.

Pour améliorer la résistance de contact entre le collecteur et les électrodes d'un supercondensateur, le document US 6,565,701 propose de mettre en oeuvre des collecteurs de courant comprenant un substrat métallique conducteur, à la surface duquel est appliquée une couche non oxydée. On facilite ainsi la conduction électrique entre les collecteurs et les électrodes, et limite leur vieillissement en surface.

Le document US 2004/0264110 décrit quant à lui un composant électrique comprenant un collecteur de courant, muni de perforations, et des électrodes, dans lequel les électrodes et le collecteur sont séparés par une couche intermédiaire afin d'empêcher l'augmentation de la résistance série des électrodes lors du fonctionnement du composant.

Le document DE 32 26 406 propose par ailleurs un condensateur formé de films métallisés, comprenant un couvercle et des couches métalliques de contact brasées sur des parties de contact. Une étape de dépôt de particules métalliques sur les parties de contact est nécessaire avant leur soudage. Le document US-A-3433920 décrit un appareil permettant de souder une pièce collectrice de courant à une bobine de stockage d'énergie possédant des tranches collectrices de courant. Le document EP-A-0123382 décrit une méthode de brasage par diffusion de surface d'aluminium qui ont été au préalable recouverte de gallium. Le document divulgue une pression comprise entre 30 et 100 MPa à une température supérieure à 150°C pour une durée supérieure à une heure, et de préférence de l'ordre de 70 à 80 heures.

L'invention a notamment pour but de pallier les inconvénients de l'art antérieur.

Un but de la présente invention est de proposer un procédé de réalisation des connexions électriques d'un ensemble de stockage d'énergie électrique comprenant des pièces massives, particulièrement des pièces en aluminium, par brasage-diffusion à basse température.

Un autre but de la présente invention est de proposer un procédé de réalisation des connexions électriques d'un ensemble de stockage d'énergie électrique diminuant la résistance électrique de contact entre les différents collecteurs de courant et favorisant la diffusion thermique et le refroidissement lors de la montée interne en température de la bobine.

Il est également désirable de proposer un procédé de réalisation des connexions électriques d'un ensemble de stockage d'énergie électrique simple qui offre une économie en termes de temps dans la réalisation des ensembles.

Un autre but de la présente invention est de proposer un procédé de réalisation des connexions électriques d'un ensemble de stockage d'énergie électrique permettant d'éviter l'utilisation de collecteurs de courant présentant des bossages ou évidements et de favoriser la distribution homogène du courant.

Un autre but de l'invention est de permettre l'utilisation de nuances d'alliages d'aluminium, autres que les séries les plus pures, telles que la série 1000. Ceci est permis par le fait que le brasage-diffusion n'implique pas les mêmes limitations que le procédé de soudage laser antérieur, en terme de choix d'alliages du fait de l'absence de réactions des inclusions (présentes dans les alliages moins purs) dans l'alliage vis à vis du procédé de brasage-diffusion.

Un autre but du brasage-diffusion est de limiter le risque de perçage des pièces collectrices lors du brasage à basse température, en comparaison du risque fort de le faire lors d'un soudage laser selon l'état de l'art.

Le procédé de brasage-diffusion est connu de l'Homme du métier. Par exemple, le document EP 0 123 382 présente un procédé de brasage-diffusion de surfaces d'aluminium recouvertes d'une couche de gallium, sous une pression élevée (30 à 100 MPa), pendant une durée comprise entre 70 et 80 heures, tandis que le document GB 2 386 578 décrit un procédé de brasage-diffusion à haute pression (de l'ordre de 20 MPa), à une température avantageusement supérieure à 200°C de deux pièces en aluminium, après frottement des surfaces affleurantes par du gallium liquide.

Enfin, un but de la présente invention est de permettre l'utilisation d'un procédé plus facilement industrialisable que la soudure laser, sans les problèmes de sécurité liés à la technologie laser, et d'une mise en oeuvre simple et moins coûteuse.

### Résumé de l'invention

Ces buts sont atteints, selon l'invention, grâce à un procédé de réalisation des connexions électriques tel que defini par la revendication 1.

Avantageusement, chaque tranche collectrice de courant est brasée directement sur une pièce collectrice de courant.

De préférence, la température de mise en oeuvre est choisie entre 150 et 400°C et le procédé est réalisé avec un métal d'apport choisi dans le groupe formé des métaux à bas point de fusion comprenant le gallium, l'indium, l'étain, le tallium, le plomb, le bismuth, et les alliages de ceux-ci.

Dans le cas où le métal d'apport est du gallium, la température de process est choisie entre 150 et 250°C. En effet, en deçà de 218°C, le gallium diffuse de deux façons dans l'aluminium : de façon intergranulaire prépondérante entre 30 et 110°C et de façon volumique (intragranulaire) prépondérante entre 110°C et 218°C. Ainsi à une température inférieure à 110°C, il existe une part non négligeable de diffusion intergranulaire du gallium qui est néfaste à la tenue du matériau car cela risque de fragiliser les joints de grains. Au delà de 218°C, la diffusion du gallium dans l'alliage est totalement volumique, ce qui ne présente plus de risque ni pour le matériau, ni pour la liaison.

De façon préférentielle, on limitera la température de process au niveau de la zone de brasage à 250°C de façon à limiter la température subie par l'élément bobiné de stockage d'énergie afin de lui éviter des dégradations de matériau qui obéreraient les performances ou la durée de vie du supercondensateur.

### Brève description des figures

L'invention sera mieux comprise et d'autres avantages et caractéristiques apparaîtront à la lecture de la description qui va suivre, donnée à titre d'exemple non limitatif, et grâce aux dessins annexés parmi lesquels:
- La figure 1 illustre un procédé de réalisation des connexions électrique d'un ensemble de stockage d'énergie électrique selon l'invention;
- La figure 2 illustre un procédé de réalisation d'un dépôt de gallium sur une pièce collectrice de courant selon l'invention;
- La figure 3 illustre deux variantes de forme d'une tranche collectrice de courant d'un ensemble de stockage d'énergie électrique.

### Description détaillée de l'invention

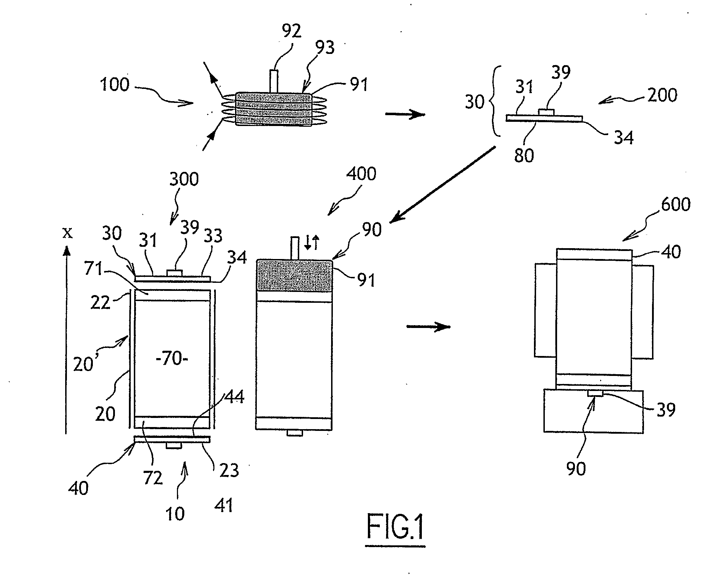

La figure 1 illustre un procédé de réalisation des connexions électrique d'un ensemble de stockage d'énergie électrique 10 selon l'invention.

Un ensemble de stockage d'énergie électrique 10 comprend une enveloppe 20" présentant un corps principal 20 , enfermant un élément bobiné 70 de stockage d'énergie électrique placé à l'intérieur et un ensemble de deux couvercles 30 et 40 refermant le corps principal de l'enveloppe 20 à deux extrémités. Il comprend également sur les couvercles 30 et 40, des moyens de liaison électrique audit élément 70.

Dans un mode de réalisation préféré de l'invention, on réalise la liaison électrique et mécanique entre les deux couvercles 30 et 40 et l'élément de stockage d'énergie électrique 70 par un procédé de brasage diffusion à basse température.

Il repose sur la migration contrôlée d'un métal d'apport choisi dans le groupe des métaux à bas point de fusion, et dans celui-ci de préférence le gallium.

De façon plus précise, un ensemble de stockage d'énergie 10 comprend un corps principal de l'enveloppe 20 se présentant sous la forme d'un cylindre, ouvert à ses deux extrémités 22 et 23 et s'étendant, sur la figure, sur sa longueur suivant un axe X.

Avantageusement, ce cylindre 20 est en aluminium, souple et conducteur.

D'autre part, ce dernier a un diamètre interne et une longueur adaptés à l'élément de stockage d'énergie électrique 70 qu'il loge.

Dans un mode de réalisation de l'invention, l'élément bobiné de stockage d'énergie électrique 70 est une bobine cylindrique s'étendant en longueur parallèlement à l'axe X.

Cette bobine est formée, d'une manière connue en soi, d'un empilement de feuilles enroulées autour d'un axe central, parallèle à l'axe X, avec ou sans présence d'un support solide central.

L'élément de stockage d'énergie électrique 70 est délimité à ses deux extrémités opposées, respectivement, par deux tranches 71 et 72 en forme de spirale formant deux débordants collecteurs de courant de l'élément 70.

Les tranches débordantes 71 et 72 sont destinées à se connecter aux moyens de liaison électrique des deux couvercles 30 et 40 qui vont les recouvrir comme cela sera décrit plus loin.

Par ailleurs, les deux couvercles 30 et 40 conducteurs se présentent, chacun, respectivement, sous la forme d'un disque de connexion électrique 31 et 41, disposé perpendiculairement à l'axe X.

Avantageusement, chacun d'entre eux est rigide et en aluminium.

L'épaisseur de chacun des disques de connexion électrique 31 et 41 est conçue pour garantir, d'une manière connue en soi, une section de passage de courant suffisante dépendante du rayon des disques 31 et 41.

D'autre part, le diamètre externe de chacun des disques de connexion électrique 31 et 41 est égal au diamètre externe du cylindre 20.

Par ailleurs, tel qu'illustré sur la figure 1, le couvercle 30 est, également, adapté pour comprendre sur sa face externe opposée à l'intérieur du corps principal de l'enveloppe 20, un plot de liaison électrique 39.

Il est de forme cylindrique de révolution et disposé au centre du disque de connexion électrique 31.

D'autres variantes de plots de liaison électrique 39 sont possibles. Elles ne sont pas limitées à l'exemple illustré sur la figure 1. On peut citer, comme exemples non limitatifs, des plots de liaison électrique à visser femelle ou mâle, des anneaux ou encore des plots tronconiques échancrés.

D'autre part, la face interne 34, 44 du disque de connexion électrique 31, 41 de chacun des couvercles 30, 40 correspond à la plage de brasage utilisée comme moyens de liaison électrique pour réaliser respectivement la connexion électrique entre l'élément de stockage d'énergie électrique 70 et les couvercles 30 et 40.

Dans un mode de réalisation préféré de l'invention, la connexion électrique de chacun des couvercles 30 et 40 avec les deux tranches 71 et 72 collectrices de courant de l'élément 70 est réalisée directement grâce au procédé de brasage diffusion à basse température suivant.

Dans une première étape 100, une masse 93 est portée à une température entre 300°C/400°C selon des techniques bien connues en soi.

Dans la variante illustrée sur la figure 1, le système de chauffage correspond à un système à anneau chauffant par induction.

On peut citer, comme exemples non limitatifs, d'autres systèmes chauffants tels qu'un four à convection ou conduction ou, de façon locale, un système Infra Rouge, UV, à effet Joule ou ultrasons.

Cette masse chauffée 93 est un lopin 91 métallique appartenant à un système de pression 92 qui sera utilisé au cours du procédé.

A l'étape 200, une fine couche de gallium est déposée sur la face interne 34 plate du couvercle 30, cette face représentant le collecteur de courant de ce dernier 30.

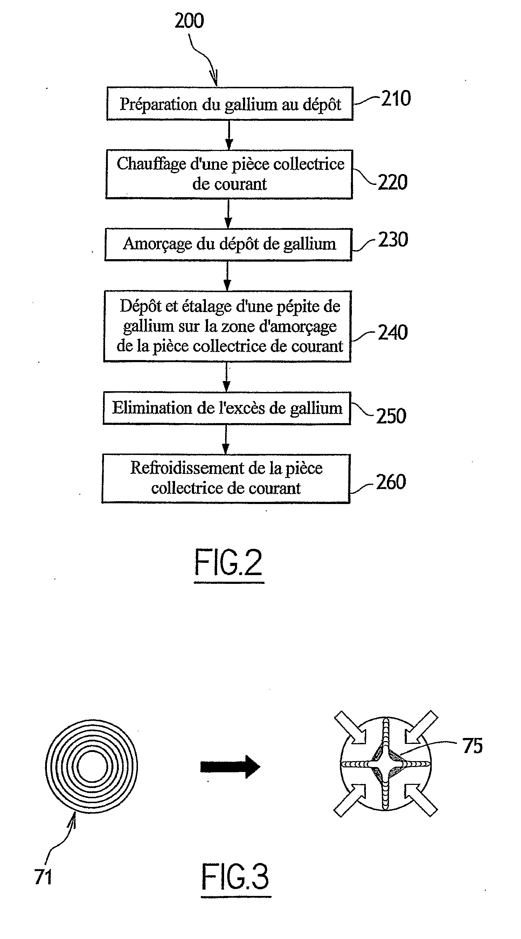

Ce procédé de dépôt sera décrit plus loin en relation avec la figure 2.

Une variante de réalisation du procédé prévoit le dépôt de gallium sur les tranches 71 et 72 collectrices de courant de l'ensemble de stockage d'énergie électrique 10.

Ensuite, à l'étape 300, on assemble directement les pièces à braser.

Le couvercle 30 recouvert de la couche de gallium est disposé à l'extrémité 22 du cylindre 20, surmontant la tranche collectrice de courant 71 de l'élément 70.

A l'étape 400, le lopin 91 monté en température est déposé sur l'ensemble couvercle 30 / tranche collectrice de courant 71 et pressé légèrement sur l'ensemble pendant un temps donné.

Le temps de brasage est généralement inférieur à 1 heure. Le choix d'un brasage à basse température permet de préserver les matériaux des éléments collecteurs et pour améliorer encore la durée de vie des supercondensateurs, on a optimisé le temps de brasage. Ainsi, avantageusement, le temps de maintien du lopin sur l'ensemble des deux pièces 30, 71 à braser peut être limité à sa durée minimale de l'ordre de 30 secondes.

De plus, une pression uniforme de l'ordre de 170 N est typiquement appliquée sur l'ensemble 30, 71 afin d'assurer un contact optimal entre le couvercle 30 et la tranche collectrice de courant 71 de l'élément de stockage d'énergie électrique 70 pendant le brasage. Cette pression, inférieure à 10 MPa, est adéquate pour optimiser la diffusion de la couche de gallium sur les tranches collectrices sans pour autant les abîmer en les écrasant. Nous rappelons en effet que les tranches collectrices sont fines en comparaison avec les couvercles, massifs.

Au contact de la masse 93 chaude, le gallium migre au travers des pièces d'aluminium 71 et 30 assemblées en diffusant complètement dans les grains d'aluminium. Il quitte l'interface des pièces 30, 71 pour être remplacé par des atomes d'aluminium, créant ainsi une liaison intime entre ces deux dernières 71 et 30.

Cette étape de brasage diffusion est caractérisée par un couple temps /température contrôlé. Les paramètres du procédé de brasage-diffusion, tels que la température, le temps, la pression, etc. doivent en effet appartenir à une gamme de valeurs définie si l'on souhaite préserver l'intégrité des tranches collectrices de courant au cours du procédé, celles-ci étant directement brasées sur le couvercle.

Le brasage s'effectue avantageusement à une température supérieure à 210°C, de préférence 220°C (température de la masse 91 chaude), le temps de maintien diminuant avec l'augmentation de la température de cette dernière.

En effet, sous ce seuil de température, le gallium peut provoquer des fragilisations par fissurations en entrant dans les joints de grains de l'aluminium.

A l'étape suivante, le lopin 91 est retiré de l'ensemble de stockage d'énergie électrique 10 et celui ci est ensuite refroidi à l'étape 600 pour éviter l'échauffement interne de l'élément de stockage d'énergie électrique 70 par conduction dans les collecteurs de courant 71 et 30 en aluminium.

De préférence, le refroidissement se fait soit en surmontant le couvercle 30 par un système de refroidissement, soit à l'air libre.

Dans une variante de réalisation de l'invention, le refroidissement est réalisé en continu tout au long du procédé en entourant, par un système de refroidissement, l'ensemble de stockage d'énergie électrique 10.

Pour réaliser la connexion électrique de l'élément de stockage d'énergie 70 avec le second couvercle 40, les étapes sont renouvelées de façon similaire.

On obtient, ainsi, un ensemble de stockage d'énergie 10 dont la connexion électrique est réalisée par un procédé de brasage diffusion au gallium à basse température.

Une variante de réalisation d'un procédé selon l'invention prévoit d'autres pièces collectrices de courant que les couvercles 30 et 40 telles que les plots de liaison électrique eux-mêmes ou toute autre pièce bien connue en soi.

Une autre variante de réalisation d'un procédé selon l'invention propose d'utiliser des couvercles présentant des bossages ou des rainures comme plages de brasage.

Le procédé de dépôt d'une fine couche de gallium de l'étape 200 va maintenant être décrit en référence avec la figure 2.

Le dépôt de gallium se fait suivant une procédure particulière qui permet d'éviter la diffusion intergranulaire du gallium dans l'aluminium, phénomène qui peut commencer dès la phase de dépôt.

Le procédé comprend les étapes suivantes.

A l'étape 210, le gallium ou un alliage de celui ci est préparé pour le dépôt. Il est divisé en petites pépites de quelques milligrammes afin de réduire les risques de fragilisation lors du brasage.

A l'étape 220, l'une des deux pièces collectrices de courant 71 ou 30 qui vont s'assembler est portée à une température supérieure à 30°C.

Avantageusement, elle est montée en température à une température de l'ordre de 40°C à 50°C.

L'étape 230 suivante correspond à une étape d'amorçage 230 du dépôt de gallium.

En effet, les inventeurs ont constaté que pour permettre l'étalage de la quantité nécessaire de gallium destiné à assurer la brasure sur la surface des pièces à braser, il était nécessaire de faire un premier dépôt d'une très faible quantité de gallium solide sur la surface à braser de l'une des pièces 71 et 30 collectrices de courant, gallium qui est ensuite étalé et dont l'excès est retiré grâce à un moyen d'étalage approprié.

Ce premier dépôt peut être réalisé par tout moyen : dépôt mécanique de gallium liquide ou solide, dépôt électrochimique, dépôt chimique en phase vapeur (CVD), dépôt par centrifugation (spin coating), pulvérisation de particules métalliques (schoopage), dépôt au trempé, dépôt par pulvérisation cathodique, jet de nano-particules, bombardement électronique, évaporation plasma, évaporation thermique, évaporation à l'arc cathodique, anodique ou par laser, interposition d'un métal d'apport contenant le gallium.

Ce premier dépôt d'une faible quantité de gallium assure la mouillabilité des pièces à braser, pour permettre ensuite à la quantité de gallium nécessaire au brasage de se diffuser à la surface des pièces à braser.

Les inventeurs ont constaté par ailleurs que le simple passage à la surface des pièces, d'un pinceau préalablement contaminé par du gallium résultant par exemple du nettoyage d'une pièce précédente, était suffisant pour assurer la mouillabilité des dites pièces et former la zône d'amorçage du dépôt qui suit.

Cette étape d'amorçage 230 est alors suivie d'une étape 240 de dépôt d'une pépite de gallium sur la zone d'amorçage que l'on étale avec le pinceau sur la surface à braser 71, 30.

L'excès de gallium est ensuite récupéré par un moyen approprié (étape 250).

De préférence, on frotte le dépôt avec le pinceau.

Les spatules qui risqueraient de créer des fissures sur les surfaces à braser et provoquer une diffusion intergranulaire du gallium dans l'aluminium sont à éviter.

Les pièces 30 et 71, respectivement 40 et 72 sont alors mises en contact et pressées l'une contre l'autre afin d'assurer leur adhésion par brasage-diffusion.

Enfin, dans une dernière étape 260, la pièce 71, 30 collectrice de courant où le gallium a été déposé est refroidie par un moyen approprié afin de solidifier le gallium le plus rapidement possible et de bloquer tout mécanisme de diffusion.

Des systèmes de refroidissement tels que l'air libre ou un réfrigérateur sont des moyens adaptés.

Avantageusement, lors de ce procédé 200 de dépôt de gallium, on dépose une quantité de gallium de l'ordre de 0.4 à 1 mg/cm².

De préférence, on dépose une quantité de gallium de 0.5 mg/cm².

Dans une variante de réalisation de ce procédé illustrée figure 3, on réalise une déformation du débordant collecteur de courant de l'élément de stockage d'énergie 70 et plus précisément des tranches 71 et 72 collectrices de courant.

Ces tranches 71 et 72 sont déformées en ramenant radialement vers le centre de la tranche les spires de l'élément de stockage d'énergie électrique 70 pour former une étoile 75 à quatre branches.

Cette configuration renforce les zones d'appui avec la seconde pièce collectrice de courant 30 lors du procédé de brasage diffusion au gallium.

Une autre variante de réalisation du procédé comporte une étape d'aplanissement des tranches collectrices de courant 71 et 72 parallèlement à chacune des faces internes 34, 44 des couvercles 30 et 40 de l'ensemble 10 afin d'augmenter la surface de contact entre ces deux pièces collectrices de courant et, par conséquent, leur surface de brasage.

Une autre variante de réalisation du procédé comporte une étape d'agglomération de billes d'aluminium projetées sur les tranches 71 et 72 collectrices de courant (shoopage) avec un certain angle afin de créer des zones d'appui renforcées avec la seconde pièce collectrice de courant 30 lors du procédé de brasage diffusion au gallium.

Dans toutes ces variantes, les autres étapes du procédé selon l'invention restent identiques à celles décrites précédemment en relation avec les figures 1 et 2.

L'homme de l'art appréciera un procédé de réalisation des connexions électriques d'un ensemble de stockage d'énergie électrique 10 à basse température rapide, simple et fiable tout en proposant une connexion électrique précise et efficace.

D'autre part, ce procédé permet, par rapport aux procédés connus de l'état de l'art, de réaliser des ensembles de stockage d'énergie électrique 10 présentant une distribution homogène du courant dans l'élément de stockage d'énergie électrique 70, une diffusion thermique efficace et une résistance électrique de contact entre pièces collectrices de courant limitée.

Enfin, la présente invention n'est pas limitée aux supercondensateurs et peut être réalisée pour tout ensemble de stockage de haute énergie électrique. On peut citer, comme exemples non limitatifs, les générateurs, batteries ou condensateurs.

Bien entendu la présente invention n'est pas limitée aux modes de réalisation particuliers qui viennent d'être décrits mais s'étend à toute variante conforme à son esprit. En particulier, la présente invention n'est pas limitée aux dessins annexés. Les références spécifiques illustrées dans les paragraphes précédents sont des exemples non limitatifs de l'invention. De même l'exemple montré ici concerne le brasage diffusion d'un couvercle, utilisé directement comme pièce collectrice de courant, sur les tranches collectrices de la bobine. Il est évident que le principe s'applique de la même façon entre les tranches collectrices de la bobine et une pièce de connexion intermédiaire entre la bobine et le couvercle, si on a choisi ce type d'architecture.

## Revendications

1. Procédé de réalisation des connexions électriques entre une bobine de stockage d'énergie (70) possédant des tranches collectrices de courant (71, 72) à chacune de ses extrémités et une pièce collectrice de courant (30, 40), l'association desdites pièces formant un ensemble de stockage d'énergie électrique (10) disposé dans une enveloppe (20), ledit ensemble de stockage d'énergie électrique (10) comprenant au moins un élément bobiné de stockage d'énergie électrique (70) destiné à être placé à l'intérieur d'une enveloppe (20"), ladite enveloppe (20") devant être fermée par au moins un couvercle (30, 40) , ledit élément (70) et ledit couvercle (30,40) comprenant, chacun, un moyen collecteur de courant (71,72,34,44), dans lequel la mise en connexion électrique des tranches collectrices (71, 72) de la bobine (70) et des pièces collectrices de courant (30, 40) est réalisée par un procédé de brasage-diffusion à basse température, ladite température étant inférieure à 400 °C, le procédé étant **caractérisé en ce qu'**il comprend au moins les étapes suivantes :
- une étape (200) d'un apport de gallium sur l'un ou l'autre des moyens collecteurs de courant (71,72,34,44);
- une étape d'assemblage (300) des deux moyens collecteurs de courant (71,72,34,44) séparés par le dépôt de gallium et,
- une étape de brasage diffusion (400) réalisée par l'application d'une force générant dans les matières à assembler une contrainte inférieure ou égale à 10 Mpa, l'ensemble étant brasé pendant une durée inférieure à 1 h, en vue de réaliser la liaison électrique de l'ensemble de stockage d'énergie électrique.

2. Procédé selon la revendication 1, **caractérisé en ce que** chaque tranche collectrice de courant (30, 40) est brasée directement sur une pièce collectrice de courant (30, 40).

3. Procédé selon l'une des revendications 1 ou 2, **caractérisé en ce que** la température de mise en oeuvre est choisie entre 150 et 400° C.

4. Procédé selon l'une des revendications 1 à 3, **caractérisé en ce que** le brasage-diffusion est effectué avec un métal d'apport choisi dans le groupe formé des métaux à bas point de fusion comprenant le cadmium, le gallium, l'indium, l'étain, le tallium, le plomb, le bismuth, et le zinc, et les alliages de ceux-ci.

5. Procédé selon la revendication 4, **caractérisé en ce que** le métal d'apport est le gallium, ou un composé contenant du gallium.

6. Procédé selon l'une des revendications 1 à 5, **caractérisé en ce que** la température de brasage à l'interface entre les pièces à assembler est choisie entre 150 et 250° C.

7. Procédé de réalisation selon l'une des revendications précédentes, des connexions électriques d'un ensemble de stockage d'énergie électrique (10), **caractérisé en ce que** un apport de gallium à l'interface entre les moyens collecteurs de courant est réalisé par l'une, ou la combinaison de plusieurs, des méthodes suivantes : dépôt mécanique de gallium liquide ou solide, dépôt électrochimique, dépôt chimique en phase vapeur (CVD), dépôt par centrifugation (spin coating), pulvérisation de particules métalliques (schoopage), dépôt au trempé, dépôt par pulvérisation cathodique, jet de nano-particules, bombardement électronique, évaporation plasma, évaporation thermique, évaporation à l'arc cathodique, anodique ou par laser, interposition d'un métal d'apport contenant le gallium.

8. Procédé selon l'une des revendications précédentes, **caractérisé en ce que** une étape (200) de dépôt de gallium comprend au moins les sous étapes suivantes :
- une étape (220) de chauffage d'un des moyens collecteurs de courant (71,72,34,44)
- une étape d'amorçage (230) du dépôt de gallium ;
- une étape (240) de dépôt et d'étalage d'une pépite de gallium sur la zone d'amorçage dudit moyen collecteur de courant (71,72,34,44) chauffé à une température donnée;
- une étape de refroidissement dudit moyen collecteur de courant (71,72,34,44).

9. Procédé selon la revendication précédente, **caractérisée en ce que** le chauffage d'un des moyens collecteurs de courant est réalisé par un des moyens de chauffage compris dans le groupe suivant : chauffage par induction, par rayonnement, par convection, par conduction , par effet Joule, par Infra-Rouge ou par Ultra-Sons

10. Procédé selon l'une des revendications 7 à 9, **caractérisé en ce qu'**il comporte en outre une étape (250) d'élimination de l'excès de gallium avant le refroidissement du moyen collecteur de courant.

11. Procédé selon l'une des revendications 7 à 10, **caractérisé en ce que** l'étape d'amorçage (20) est réalisée en contaminant l'un des moyens collecteurs de courant (71, 72,34,44) d'une faible dose de poudre de gallium.

12. Procédé selon l'une des revendications précédentes caractérisé 15 en ce que les moyens collecteurs de courant (71,72,34,44) sont en aluminium ou en alliage léger.

13. Procédé selon l'une des revendications précédentes **caractérisé en ce qu'**il comprend, en outre, une étape de refroidissement de l'ensemble de stockage d'énergie électrique (10) pendant l'étape de brasage-20 diffusion à l'exception de la partie en cours de brasage.

14. Procédé selon l'une des revendications précédentes **caractérisé en ce que** la quantité de gallium déposée est inférieure à 1 mg/cm2

15. Procédé selon l'une des revendications précédentes **caractérisé en ce que** la quantité de gallium déposée est comprise entre 0,4 et 25 0.6mg/cm².

16. Procédé selon l'une des revendications précédentes **caractérisé en ce que** le moyen collecteur de courant du couvercle (30,40) correspond à la face interne (34,44) de ce dernier.

17. Procédé selon l'une des revendications précédentes caractérisé en 30 ce que le moyen collecteur de courant (71,72) de l'élément bobiné de stockage d'énergie électrique (70) est une tranche collectrice de courant (71,72) en forme de spirale de ce dernier.

18. Procédé selon la revendication précédente **caractérisé en ce qu'**il comprend, en outre, une étape de déformation de la tranche collectrice de courant (71,72) de l'élément bobiné de stockage d'énergie électrique (70) en forme d'étoile.

19. Procédé selon l'une des revendications précédentes caractérisé 5 en ce que il comprend, en outre, une étape d'aplanissement de la tranche collectrice de courant (71,72) de l'élément bobiné de stockage d'énergie électrique (70) parallèlement à la face interne (34,44) du couvercle (30,40).

20. Procédé selon la revendication 18, **caractérisé en ce que** il 10 comprend, en outre préalablement à l'étape de brasage-diffusion, une étape d'agglomération (shoopage) de billes d'aluminium projetées sur la tranche collectrice de courant (71,72) de l'élément de stockage d'énergie électrique (70) avec un certain angle afin de créer des zones d'appui renforcées avec le second moyen collecteur de courant (34,44).

21. Ensemble de stockage d'énergie électrique réalisé par un procédé conforme à l'une des revendications 1 a 20 précédentes.

## Patentansprüche

1. Verfahren zum Herstellen der elektrischen Verbindungen zwischen einer Energiespeicherspule (70), welche Stromabnehmerscheiben (71, 72) an jedem ihrer Enden besitzt, und einen Stromabnehmerteil (30, 40), wobei der Verbund der genannten Teile eine in einem Gehäuse (20) angeordnete elektrische Energiespeichereinheit (10) bildet,
welche elektrische Energiespeichereinheit (10) wenigstens ein gewickeltes, elektrisches Energiespeicherelement (70) umfasst, das dazu ausgestaltet ist, im Inneren eines Gehäuses (20") platziert zu werden, wobei das Gehäuse (20") durch wenigstens einen Deckel (30,40) geschlossen werden muss, das Element (70) und der Deckel (30, 40) jeweils ein Stromabnehmermittel (71,72,34,44) umfassen, in dem die elektrische Verbindungsherstellung der Abnehmerscheiben (71, 72) der Spule (70) und der Stromabnehmerteile (30, 40) durch ein Niedrigtemperatur-Diffusionslötverfahren mit einer Temperatur kleiner als 400°C verwirklicht wird,
wobei das Verfahren **dadurch gekennzeichnet ist, dass** es wenigstens die folgenden Schritte umfasst:
- Einen Schritt (200) zum Zusetzen von Gallium auf das eine oder das andere der Stromabnehmermittel (71,72,34,44);
- Einen Schritt (300) zum Fügen der beiden durch die Gallium-Ablagerung getrennten Stromabnehmermittel (71,72,34,44), und
- Einen Diffusionslötschritt (400), verwirklicht durch das Anwenden einer Kraft, welche in den zu fügenden Materialien eine mechanische Spannung kleiner oder gleich 10 Mpa erzeugt, wobei die Einheit während einer Dauer von weniger als 1 h gelötet wird, um die elektrische Bindung der elektrischen Energiespeichereinheit herzustellen.

2. Verfahren gemäß Anspruch 1, **dadurch gekennzeichnet, dass** jede Stromabnehmerscheibe (30, 30) direkt auf ein Stromabnehmerteil (30, 40) gelötet wird.

3. Verfahren gemäß einem der Ansprüche 1 oder 2, **dadurch gekennzeichnet, dass** die Ausführungstemperatur zwischen 150 und 400°C gewählt wird.

4. Verfahren gemäß einem der Ansprüche 1 bis 3, **dadurch gekennzeichnet, dass** das Diffusionslöten mit einem Zusatzwerkstoff ausgeführt wird, der ausgewählt wird aus der Gruppe der Metalle mit niedrigem Schmelzpunkt, umfassend Cadmium, Gallium, Indium, Zinn, Tallium, Blei, Wismut, Zink und deren Legierungen.

5. Verfahren gemäß Anspruch 4, **dadurch gekennzeichnet, dass** der Zusatzwerkstoff Gallium oder eine Gallium-haltige Verbindung ist.

6. Verfahren gemäß einem der Ansprüche 1 bis 5, **dadurch gekennzeichnet, dass** die Löttemperatur an der Grenzfläche zwischen den zu fügenden Teilen zwischen 150 und 250 °C gewählt wird.

7. Verfahren gemäß einem der vorstehenden Ansprüche zum Herstellen der elektrischen Verbindungen einer elektrischen Energiespeichereinheit (10), **dadurch gekennzeichnet, dass** ein Galliumzusatz an der Grenzfläche zwischen den Stromabnehmermitteln durch eines der folgenden Verfahren oder einer Kombination davon erfolgt: mechanische Ablagerung von flüssigem oder festem Gallium, elektrochemische Ablagerung, chemische Gasphasenabscheidung (CVD), Ablagerung durch Zentrifugation (spin coating), Pulverisierung von metallischen Teilchen (Schoopierung), Ablagerung durch Elektroplattieren, Ablagerung durch kathodische Pulverisierung, Nanopartikelstrahl, Elektronenbeschuss, Plasmaevaporation, thermische Evaporation, Evaporation durch kathodische oder anodische Bogenentladung, Laser-Evaporation , Einfügen eines Galliumhaltigen Zusatzwerkstoffs.

8. Verfahren gemäß einem der vorstehenden Ansprüche, **dadurch gekennzeichnet, dass** ein Schritt (200) zur Galliumablagerung wenigstens die folgenden Unterschritte umfasst:
- Ein Schritt (220) zum Erhitzen eines der Stromabnehmermittel (71, 72,34,44)
- Ein Schritt (230) Zünden der Galliumablagerung;
- Ein Schritt (240) zum Ablagern und zum Verteilen eines Galliumklumpen auf der Zündungsfläche des genannten Stromabnehmermittels (71,72,34,44), welches auf eine vorgegebene Temperatur erhitzt wurde;
- Ein Schritt zum Abkühlen des genannten Stromabnehmermittels (71,72,34,44).

9. Verfahren gemäß dem vorstehenden Anspruch, **dadurch gekennzeichnet, dass** das Erhitzen eines der Stromabnehmermittel durch eines der folgenden Erhitzungsmittel verwirklicht wird: Erhitzen durch Induktion, durch Strahlung, durch Konvektion, durch Leitung, durch Joule-Effekt, durch Infrarot, durch Ultraschall.

10. Verfahren gemäß einem der Ansprüche 7 bis 9, **dadurch gekennzeichnet, dass** es ferner einen Schritt (250) zum Beseitigen des Gallium-Überschusses vor dem Abkühlen des Stromabnehmermittels umfasst.

11. Verfahren gemäß einem der Ansprüche 7 bis 10, **dadurch gekennzeichnet, dass** der Zündungsschritt (20) verwirklicht wird, indem eines der Stromabnehmermittel (71,72,34,44) mit einer schwachen Dosis Galliumpulver verunreinigt wird.

12. Verfahren gemäß einem der vorstehenden Ansprüche, **dadurch gekennzeichnet, dass** die Stromabnehmermittel (71,72,34,44) aus Aluminium oder einer leichten Legierung bestehen.

13. Verfahren gemäß einem der vorstehenden Ansprüche, **dadurch gekennzeichnet, dass** es ferner einen Schritt zum Abkühlen der elektrischen Energiespeichereinheit (10) während des Diffusionslötschritts mit Ausnahme des sich im Löten befindlichen Teils umfasst.

14. Verfahren gemäß einem der vorstehenden Ansprüche, **dadurch gekennzeichnet, dass** die abgelagerte Menge Gallium geringer als 1 mg/cm2 ist.

15. Verfahren gemäß einem der vorstehenden Ansprüche, **dadurch gekennzeichnet, dass** die abgelagerte Menge Gallium zwischen 0,4 und 0.6 mg/cm² ist.

16. Verfahren gemäß einem der vorstehenden Ansprüche, **dadurch gekennzeichnet, dass** das Stromabnehmermittel des Deckels (30,40) der Innenseite (34,44) des letzteren entspricht.

17. Verfahren gemäß einem der vorstehenden Ansprüche, **dadurch gekennzeichnet, dass** das Stromabnehmermittels (71,72) des gewickelten, elektrischen Energiespeicherelements (70) eine Stromabnehmerscheibe (71,72) des letzteren in Spiralform ist.

18. Verfahren gemäß dem vorstehenden Anspruch, **dadurch gekennzeichnet, dass** es ferner einen Schritt zum Verformen der Stromabnehmerscheibe (71,72) des gewickelten, elektrischen Energiespeicherelements (70) in Sternform umfasst.

19. Verfahren gemäß einem der vorstehenden Ansprüche, **dadurch gekennzeichnet, dass** es ferner einen Schritt zum Einebnen der Stromabnehmerscheibe (71,72) des gewickelten, elektrischen Energiespeichelements parallel zur Innenseite (34,44) des Deckels (30,40) umfasst.

20. Verfahren gemäß Anspruch 18, **dadurch gekennzeichnet, dass** es ferner vor dem Diffusionslötschritt einen Schritt zum Agglomerieren (Spritzmetallisierung) von Aluminiumkugeln umfasst, welche auf die Stromabnehmerscheibe (71,72) des elektrischen Energiespeichelements (70) unter einem bestimmten Winkel geschleudert werden, um mit dem zweiten Stromspeichermittel (34,44) verstärkte Auflagezonen zu schaffen.

21. Elektrische Energiespeichereinheit, hergestellt durch ein Verfahren gemäß einem der vorstehenden Ansprüche 1 bis 20.

## Claims

1. A production method of electrical connections between an energy storage coil (70) having current-collecting slices (71, 72) at each of its ends and a current-collecting piece (30, 40), the association of said pieces forming an electrical energy storage unit (10) placed in a casing (20), said electrical energy storage unit (10) comprising at least one electrical energy storage coil element (70) intended to be placed inside a casing (20"), said casing (20") having to be closed by at least one cover (30, 40), said element (70) and said cover (30, 40) each comprising current-collector means (71, 72, 34, 44), wherein the electrical connecting of the collecting slices (71, 72) of the coil (70) and the current-collecting pieces (30, 40) is completed by a method of low-temperature diffusion brazing, said temperature being less than 400°C, the method being **characterized in that** it comprises at least the following steps:
- a step (200) of contributing gallium on one or the other of the current-collector means (71, 72, 34, 44);
- an assembly step (300) of the two current-collector means (71, 72, 34, 44) separated by the gallium deposit and,
- a diffusion brazing step (400) completed by application of a force generating in the materials to be assembled a restriction less than or equal to 10 Mpa, the unit being brazed over a period of less than 1 h, in light of making an electrical connection of the electrical energy storage unit.

2. The method according to claim 1, **characterized in that** each current-collecting slice (30, 40) is brazed directly on a current-collecting piece (30, 40).

3. The method according to any one of claims 1 or 2, **characterized in that** the working temperature is selected between 150 and 400°C.

4. The method according to any one of claims 1 to 3, **characterized in that** the diffusion brazing is completed with a contributing metal selected in the group formed from metals with a low melting point comprising cadmium, gallium, indium, tin, thallium, lead, bismuth, and zinc, and alloys thereof.

5. The method according to claim 4, **characterized in that** the contributing metal is gallium, or a compound containing gallium.

6. The method according to any one of claims 1 to 5, **characterized in that** the brazing temperature at the interface between the pieces to be assembled is selected between 150 and 250°C.

7. The production method according to any one of the preceding claims, of electrical connections of an electrical energy storage unit (10), **characterized in that** contributing gallium at the interface between the current-collector means is completed by one, or the combination of several, of the following methods: mechanical deposit of liquid or solid gallium, electrochemical deposit, chemical vapour deposition (CVD), spin coating, schoopage, deposit by soaking, deposit by cathodic pulverisation, nanoparticle jet, electronic bombardment, plasma evaporation, thermal evaporation, cathodic arc, anodic or laser evaporation, interposition of a metal layer containing gallium.

8. The method according to any one of the preceding claims, **characterized in that** a step (200) of gallium deposit comprises at least the following substeps:
- a heating step (220) of one of the current-collector means (71, 72, 34, 44);
- a priming step (230) of the gallium deposit;
- a step (240) of depositing and spreading a nugget of gallium on the priming zone of said current-collector means (71, 72, 34, 44) heated to a given temperature;
- a cooling step of said current-collector means (71, 72, 34, 44).

9. The method according to the preceding claim, **characterized in that** heating one of the current-collector means is done by one of the heating means from the following group: heating by induction, by radiation, by convection, by conduction, by Joule effect, by infrared or by ultrasound.

10. The method according to any one of claims 7 to 9, **characterized in that** it further comprises a step (250) of elimination of the excess gallium before cooling of the current-collector means.

11. The method according to any one of claims 7 to 10, **characterized in that** the priming step (20) is completed by contaminating one of the current-collector means (71, 72, 34, 44) with a low dose of gallium powder.

12. The method according to any one of the preceding claims, **characterized in that** the current-collector means (71, 72, 34, 44) are made of aluminium or light alloy.

13. The method according to any one of the preceding claims, **characterized in that** it further comprises a cooling step of the electrical energy storage unit (10) during the diffusion brazing step with the exception of the part being brazed.

14. The method according to any one of the preceding claims, **characterized in that** the amount of gallium deposited is less than 1 mg/cm².

15. The method according to any one of the preceding claims, **characterized in that** the amount of gallium deposited is between 0.4 and 0.6 mg/cm².

16. The method according to any one of the preceding claims, **characterized in that** the current-collector means of the cover (30, 40) correspond to the inner face (34, 44) of the latter.

17. The method according to any one of the preceding claims, **characterized in that** the current-collector means (71, 72) of the electrical energy storage coil element (70) is a current-collecting slice (71, 72) in the form of a spiral of the latter.

18. The method according to the preceding claim, **characterized in that** it further comprises a deformation step of the current-collecting slice (71, 72) of the electrical energy storage coil element (70) in a star form.

19. The method according to any one of the preceding claims, **characterized in that** it further comprises a levelling step of the current-collecting slice (71, 72) of the electrical energy storage coil element (70) parallel to the inner face (34, 44) of the cover (30, 40).

20. The method according to claim 18, **characterized in that** it further comprises prior to the diffusion brazing step an agglomeration step (shoopage) of aluminium balls projected on the current-collecting slice (71, 72) of the electrical energy storage element (70) with a certain angle so as to create support zones reinforced with the second current-collector means (34, 44).

21. An electrical energy storage unit made by a method according to any one of the preceding claims 1 to 20.
